Europäisches Patentamt

European Patent Office

Office européen des brevets

(19)

(11) Veröffentlichungsnummer : **0 394 557 B1**

(12)

# EUROPÄISCHE PATENTSCHRIFT

(45) Veröffentlichungstag der Patentschrift :
**10.03.93 Patentblatt 93/10**

(51) Int. Cl.$^5$ : **C01F 11/46, C04B 11/26**

(21) Anmeldenummer : **89123335.5**

(22) Anmeldetag : **16.12.89**

(54) **Verfahren zur Herstellung chloridarmer Gipsprodukte aus calciumhaltigen Rückständen von Abgasreinigungsanlagen.**

(30) Priorität : **26.04.89 DE 3913822**

(43) Veröffentlichungstag der Anmeldung :
**31.10.90 Patentblatt 90/44**

(45) Bekanntmachung des Hinweises auf die
Patenterteilung :
**10.03.93 Patentblatt 93/10**

(84) Benannte Vertragsstaaten :
**AT BE CH DE ES FR GB GR IT LI LU NL SE**

(56) Entgegenhaltungen :
**EP-A- 0 074 772**
**EP-A- 0 078 904**
**DE-A- 3 433 759**
**DE-A- 3 639 612**

(73) Patentinhaber : **VAW aluminium AG**
**Georg-von-Boeselager-Strasse 25**
**W-5300 Bonn 1 (DE)**

(72) Erfinder : **Köhnk, Diethelm**
**Zechenweg 27**
**W-4709 Bergkamen-Rünthe (DE)**
Erfinder : **Bings, Hubert**
**Friedenstrasse 3**
**W-4670 Lünen (DE)**

(74) Vertreter : **Müller-Wolff, Thomas, Dipl.-Ing.**
**Georg-von-Boeselager-Strasse 25 Postfach**
**2468**
**W-5300 Bonn 1 (DE)**

EP 0 394 557 B1

Jouve, 18, rue Saint-Denis, 75001 PARIS

## Beschreibung

Die vorliegende Erfindung betrifft ein Verfahren zur thermischen Herstellung chloridarmer Gipsprodukte aus den calciumhaltigen Rückständen trockener oder nasser Abgasreinigungsanlagen, die Sulfite, Chloride, Sulfate, Hydroxide, Carbonate und/oder Oxide des Calciums bzw. deren Gemische enthalten.

Die genannten calciumhaltigen Rückstände entstehen z.B. bei der Entfernung von $SO_2$ und anderen umweltschädlichen Bestandteilen aus Abgasen bzw. Rauchgasen von Kohlekraftwerken, Verbrennungs- und Umschmelzanlagen. Verfahren zur thermischen Umwandlung derartiger Rückstände in Gipsprodukte durch Oxidation und Kalzination sind bereits bekannt. Allerdings können nach diesen Verfahren keine Rückstände mit hohen $CaCl_2$-Gehalten zu hochwertigen, chloridarmen Gipsprodukten verarbeitet werden.

Einige dieser Rückstände, insbesondere die Sprühabsorptionsrückstände aus trockenen Abgasreinigungsanlagen enthalten jedoch hohe Gehalte an $CaCl_2$ von bis zu 10 Gew.-%. Ein Verfahren zur Erzeugung eines chloridarmen Gips-Anhydrits aus derartigen Rückständen wird in der EP 0 074 772 vorgeschlagen. Dabei wird in zwei getrennten Verfahrensstufen zunächst der $CaSO_3$-Anteil des Rückstandes zu $CaSO_4$ oxidiert und anschließend Chlor durch Zugabe von Wasserdampf bei Temperaturen zwischen 600 und 950 °C entfernt. Zwingend notwendig zur Erzielung geringer Chlorgehalte im Produkt sind nach diesem Verfahren hohe Mengen an Flugasche bzw. $SiO_2$- und $Al_2O_3$-haltigen Stoffen. Diese sollen den Calciumanteil des $CaCl_2$ binden als Ca-Silikat bzw. Ca-Aluminat und dadurch eine ausreichende Reaktion des freiwerdenden Chlors mit Wasserdampf zu gasförmigem HCl ermöglichen.

Trotz dieser Maßnahme können nur bei hohen Temperaturen von deutlich über 600 °C Chloridgehalte unter 0,5 Gew.-% im Produkt erreicht werden. Ein weiterer Nachteil dieses Verfahrens ist der zwangsläufig hohe Anteil an Silikat- bzw. Aluminatbestandteilen im Endprodukt.

Aufgabe des erfindungsgemäßen Verfahrens ist es, die Herstellung hochwertiger Gipsprodukte mit Chlorgehalten unter 0,5 Gew.-% aus calciumhaltigen Rückständen mit $CaCl_2$-Gehalten von bis zu 10 Gew.-% zu ermöglichen, bei niedrigen Temperaturen zwischen 500 und 650 °C und unabhängig von Flugasche- bzw. $SiO_2/Al_2O_3$-Anteilen in der Ausgangsmischung. Zusätzlich sollen als weitere Einsatzstoffe soweit möglich Abfallstoffe verwertet werden können, so daß das Verfahren einerseits der Erzeugung wertvoller Baustoffe und andererseits der Entsorgung von Abfallstoffen, deren wirtschaftliche Aufarbeitung bisher nicht gegeben ist, dient.

Die Lösung dieser Aufgabe wird erfindungsgemäß durch die im kennzeichnenden Teil des Anspruchs 1 angegebenen Merkmale erreicht. Vorteilhafte Ausgestaltungen und Weiterbildungen dieser Aufgabenlösung ergeben sich aus den Unteransprüchen.

Bei einer Oxidation der eingangs erwähnten calciumhaltigen Rückstände mit hohen $CaCl_2$-Gehalten laufen in Anwesenheit von $O_2$ bei erhöhten Temperaturen folgende Reaktionen ab:

$$
\begin{array}{llll}
\text{(a)} & CaSO_3 + 1/2\ O_2 & = & CaSO_4 \\
\text{(b)} & Ca(OH)_2 & = & CaO + H_2O \\
\text{(c)} & CaCO_3 & = & CaO + CO_2 \\
\text{(d)} & CaCl_2 + H_2O & = & CaO + 2HCl
\end{array}
$$

Bereits bei Temperaturen oberhalb von etwa 450°C kommt es im Reaktor zur Bildung von niedrigschmelzenden Phasen zwischen den reagierenden Stoffen, insbesondere zwischen $CaCl_2$ und CaO. Dies führt zu Sintervorgängen zwischen den einzelnen Feststoffpartikeln, die dementsprechend agglomerieren. Dadurch wird die weitere Umsetzung der Partikel stark behindert oder sogar vollständig unterbunden. Das Produkt enthält in diesem Falle unerwünscht hohe Gehalte an $CaSO_3$, $CaCl_2$ und CaO.

Gleichzeitig kommt es zu Störungen des Ofenbetriebes durch Anbackungen an den Wänden.

Temperaturen unterhalb von 500°C reichen zudem für einen vollständigen Ablauf der Oxidationsreaktionen und der Chlorabspaltung nicht aus.

Ofenaggregate wie z.B. Drehrohröfen oder einfache Wirbelschichtöfen ohne Feststoffrezirkulation sind aufgrund der relativ schlechten Wärme- und Stoffübergänge nicht geeignet. Aber auch in der zirkulierenden Wirbelschicht gelingt es nicht, durch eine reine Oxidation ohne weitere Maßnahmen ein chlorid- und sulfitarmes Gipsprodukt zu erzeugen, obwohl hier ausgezeichnete Stoff- und Wärmeübergänge durch hohe Gasströmungsgeschwindigkeiten und hohe Suspensionsgrade vorliegen.

Es wurde festgestellt, daß durch Zugabe von schwefelhaltigen Substanzen bei Anwesenheit von Wasserdampf im Reaktor die Temperatur, bei der sich niedrigschmelzende Phasen bilden zu deutlich höheren Werten verschoben werden.

Auf diese Weise wird es möglich, die zum nahezu vollständigen Ablauf der pyrohydrolytischen Chlorabspaltung nach Reaktion (d) notwendigen Temperaturen oberhalb von 500°C zu erreichen, ohne das Auftreten von Sintervorgängen. Das Gleichgewicht der Reaktion (d) wird deutlich auf die rechte Seite verschoben, indem die Produkte kontinuierlich abgeführt werden. Dieses wird bewirkt einerseits durch die Sulfatisierung des gebildeten CaO zu $CaSO_4$, und andererseits den sehr schnellen Abtransport des gebildeten gasförmigen HCl aufgrund der geringen mittleren Verweilzeit der gasförmigen Stoffe. Vorteilhaft anzuwendende mittlere Verweilzeiten für das vorgeschlagene Verfahren liegen zwischen 2 und 4 sec.

Die in der zirkulierenden Wirbelschicht eingestellten Temperaturen sollten einen Wert von 650°C nicht überschreiten, da oberhalb dieser Temperatur die bereits erwähnten Sintervorgänge einsetzen.

Als Ausgangsstoffe für das erfindungsgemäße Verfahren eignen sich insbesondere die Sprühabsorptionsrückstände gemäß Anspruch 3.

Als Schwefelträger für die Sulfatisierung der freien CaO-Anteile werden vorteilhafterweise Schwefelblüte aus Kraftwerksrückständen und/oder Abfallsäuren wie z.B. Schwefelsäure oder schwefelhaltige Säuren aus Eloxalbädern verwandt. Die genannten Abfallsäuren können gleichzeitig als wasserabspaltende Substanzen zur pyrohydrolytischen Aufspaltung des $CaCl_2$ unter Bildung von HCl ausgenutzt werden. Die zugegebenen Mengen der Schwefelträger sollten dabei so bemessen sein, daß die wirksamen Bestandteile nahezu im stöchiometrisch notwendigen Verhältnis in die zirkulierende Wirbelschicht eingebracht werden.

Die hervorragenden Stoff- und Wärmeübergänge in der zirkulierenden Wirbelschicht erlauben es, einen Teil des Wärmehaushaltes durch Verbrennung bzw. Vergasung von Alternativbrennstoffen zu decken. Als derartige Alternativbrennstoffe eignen sich ölhaltige Abfallstoffe wie z.B. Bleicherden aus Altölaufbereitungsanlagen oder Filtererden aus Walzölreinigungsanlagen.

Als Produkt aus der zirkulierenden Wirbelschicht ergibt sich ein chloridarmer Gips-Anhydrit. Dieser Gips-Anhydrit kann ggf. in einer nachgeschalteten Verfahrensstufe im Abgasstrom der zirkulierenden Wirbelschicht zu einem chloridarmen β-Halbhydrat-Gips rehydratisiert werden. Die Rehydratisierung erfolgt vorzugsweise in einem Temperaturbereich von 150 bis 200°C. Das zur Umwandlung benötigte Wasser kann entweder unmittelbar, als Wasserdampf oder über wasserabspaltende Substanzen eingebracht werden. Diese Substanzen dürfen allenfalls sehr geringe Verunreinigungsgehalte aufweisen, da sie ohne weitere Reaktionen in das Produkt überführt werden. Hierzu eignen sich insbesondere REA-Gips (Rauchgasentschwefelungs-Gips) oder Chemie-Gips aus nassen Abgasreinigungsanlagen. Die in dieser Verfahrensstufe zugegebenen Substanzen (Wasser, REA-Gips oder Chemiegips) dienen gleichzeitig zur Kühlung des Abgases aus der zirkulierenden Wirbelschicht.

Nach dem vorgeschlagenen Verfahren lassen sich hochwertige Gipsprodukte mit geringen Chlorgehalten von deutlich unter 0,5 Gew.-% erzielen, auch wenn im Ausgangsstoff hohe $CaCl_2$-Anteile von bis zu 10 Gew.-% vorliegen. Das Verfahren arbeitet bei relativ geringen Temperaturen zwischen 500 und 650°C. Der Choridgehalt im Endprodukt ist unabhängig von Flugasche- bzw. $SiO_2/Al_2O_3$-Bestandteilen in der Ausgangsmischung. Das Verfahren erlaubt die Herstellung weitgehend Flugasche- bzw. $SiO_2/Al_2O_3$-freier Gipsprodukte. Ein weiterer Vorteil des Verfahrens ist die Möglichkeit eine Vielzahl von Abfallstoffen umweltfreundlich zu entsorgen.

Im folgenden soll der Ablauf des erfindungsgemäßen Verfahrens anhand von Zeichnungen beispielsweise erläutert werden.

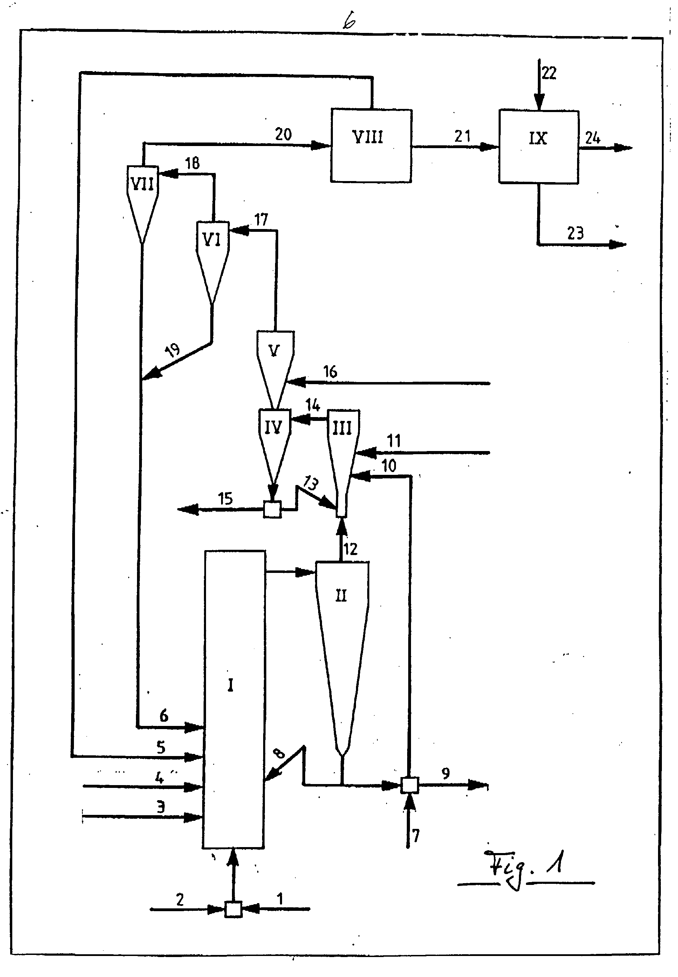

Fig. 1 zeigt das schematische Fließbild einer erfindungsgemäßen Anlage zur gleichzeitigen Herstellung von Gips-Anhydrit und β-Halbhydrat Gips.

Der Reaktor (I) wird mit Heißgas (1) und Wasserdampf (2) fluidisiert. Sprühabsorptionsrückstände (3), schwefelhaltige Rückstände (4), Filterstaub (5) und Zyklonstaub (6) werden in diesem Reaktor (I) bei 500 - 650°C zur Reaktion gebracht. Der rezirkulierte Feststoff (8) wird über den Zyklon (II) in diesen Reaktor zurückgeführt. Der ausgeschleuste Feststoff kann als Produkt (9) abgeführt werden, oder pneumatisch mit Luft (7) als Stoffstrom (10) in den Reaktor (III) transportiert werden. Dieser Reaktor (III) wird mit staubbeladenem Abgas (12) aus dem Zyklon (II) fluidisiert. Unter Zusatz von Wasserdampf (11) reagiert der Gips-Anhydrit zu Beta-Halbhydrat-Gips. Das feststoffbeladene Abgas (14) aus dem Reaktor (III) wird über den Zyklon (IV) geführt, wobei der Feststoff abgeschieden wird und der nicht rezirkulierte Feststoff (15) als Produkt abgeführt wird und der rezirkulierte Feststoff (13) wieder in den Reaktor (III) gelangt. Dem Reaktor (III) werden über den Venturi (V) Wasser, Rea-Gips bzw. Chemiegipsdihydrat (16) zugeführt. Hierdurch werden gleichzeitig die staubbeladenen Abgase (17) gekühlt. Über die Zyklone (VI) und (VII) werden die Feststoffströme (19) und (6) in den Reaktor (I) rückgeführt. Das staubbeladene Gas (20) wird in einem Filter (VIII) staubgereinigt, wobei der Staub als Stoffstrom (5) dem Reaktor I wieder zugeführt wird.

Das staubfreie Abgas (21) wird in einer Trockengasreinigung (IX) mit Hilfe eines Absorptionsmittels (22) von den HCl-Bestandteilen gereinigt. Hierbei entsteht das gereinigte Abgas (24) und der calciumchloridhaltige angereicherte Rückstand (23).

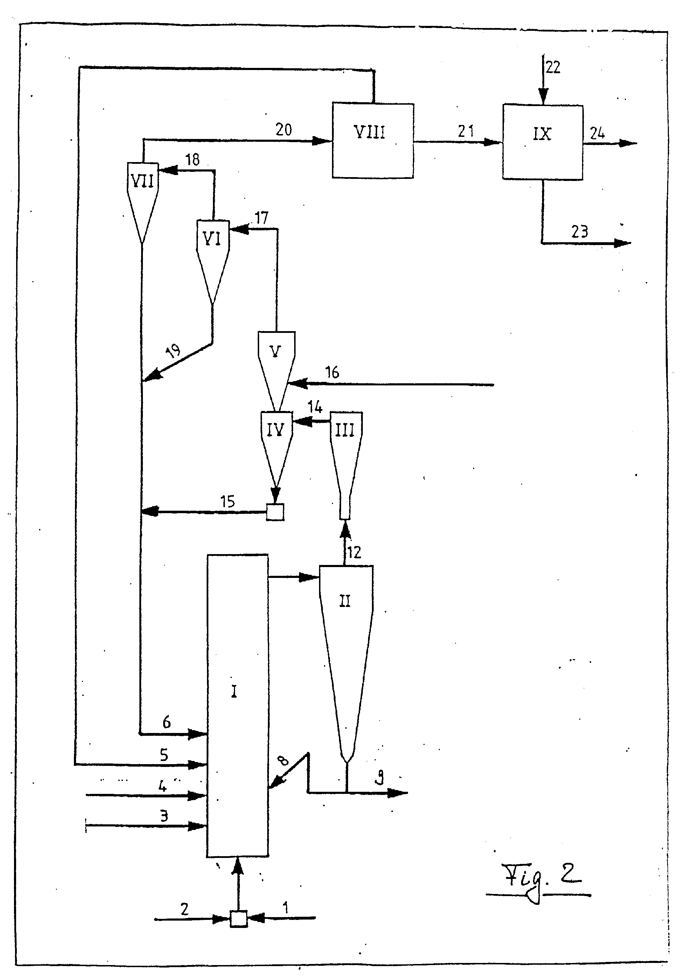

Fig. 2 zeigt die leicht modifizierte Anlage zur alleinigen Herstellung von Gips Anhydrit. Hier wird der aus dem Rückfuhrzyklon (II) ausgeschleuste Gips-Anhydrit (9) vollständig als Produkt abgeführt. Das staubbeladene Abgas (12) wird über den Reaktor (III) in den Zyklon (IV) geführt. Hier wird der Feststoff (15) abgeschieden und in den Reaktor (I) zurückgeführt. Der weitere Verfahrensablauf entspricht demjenigen nach Fig. 1.

**Anwendungsbeispiel**

Ein Sprühabsorptionsrückstand (Analyse in Gew.-% s. Tab.) wurde bei einer Temperatur von 550°C in einem Verfahren gemäß Fig. 2 zu einem Gips-Anhydrit verarbeitet. Als Zusätze wurden Wasserdampf und Schwefelsäure verwendet. Die zugesetzten Mengen wurden dabei so bemessen, daß der Eintrag an Schwefel in nahezu stöchiometrisch notwendigem Verhältnis und der Eintrag an Wasser in nahezu doppelt stöchiometrischem Verhältnis erfolgte. Unter diesen Bedingungen wurde ein hochwertiger nahezu sulfit- und chlorfreier Anydrit erzeugt (Analyse in Gew.-% s. Tab.).

|  |  | Einsatzstoff (Sprühabsorptionsrückstand) | Produkt (Anhydrit)) |
| --- | --- | --- | --- |
| Feuchtigkeit bei 45°C | % | 0,5 | – |
| Analyse im Original-Material: |  |  |  |
| Glühverlust bei 360°C | % | 8,1 | 0,1 |
| CaO – ges. | % | 58,4 | 39,7 |
| CaO – frei | % | 13,3 | < 0,1 |
| SO4 | % | 6,8 | 67,4 |
| SO3 | % | 26,8 | 0,5 |
| Cl | % | 2,6 | 0,1 |

**Patentansprüche**

1. Verfahren zur Herstellung chloridarmer Gipsprodukte aus calciumhaltigen Rückständen trockener oder nasser Abgasreinigungsanlagen, wie z.B. von Kohlekraftwerken, Verbrennungs- oder Umschmelzanlagen, die Sulfite, Chloride, Sulfate, Hydroxide, Carbonate oder Oxide des Calciums bzw. deren Gemische enthalten, durch Oxidation und pyrohydrolytische Chloridspaltung, dadurch gekennzeichnet, daß die calciumhaltigen Rückstände

   zusammen mit schwefelhaltigen, weitgehend Ca-freien Substanzen, zur Sulfatisierung der nicht als Sulfit oder Sulfat gebundenen Calciumanteile der Rückstände,

   und zusammen mit Wasser, Wasserdampf und/oder wasserabspaltender Substanzen, zur pyrohydrolytischen Aufspaltung der Calciumchloridanteile der Rückstände

   in einer zirkulierenden Wirbelschicht in Anwesenheit eines $O_2$-haltigen, heißen Gases zur Reaktion gebracht werden, wobei als Produkt ein chloridarmer Gips-Anhydrit entsteht.

2. Verfahren nach Anspruch 1, dadurch gekennzeichnet, daß der in der zirkulierenden Wirbelschicht erzeugte chloridarme Gips-Anhydrit in einer nachgeschalteten Verfahrensstufe durch Zugabe von Wasser, Wasserdampf und/oder gipshaltiger, wasserabspaltender Substanzen zu einem β-Halbhydrat-Gips rehydratisiert wird.

3. Verfahren nach einem der vorhergehenden Ansprüche, dadurch gekennzeichnet, daß als calciumhaltige Rückstände, Sprühabsorptionsrückstände mit 20-70 Gew.-% $CaSO_3$, 2-10 Gew.-% $CaCl_2$, 2-30 Gew.-% $Ca(OH)_2$, 5-10 Gew.-% $CaCO_3$ und 5-10 Gew.-% $CaSO_4$ verwendet werden.

4. Verfahren nach einem der vorhergehenden Ansprüche, dadurch gekennzeichnet, daß die Temperatur in der zirkulierenden Wirbelschicht zwischen 500 und 650 °C liegt.

5. Verfahren nach einem der vorhergehenden Ansprüche, dadurch gekennzeichnet, daß als schwefelhaltige, weitgehend Ca-freie Substanzen Schwefelblüte aus Kraftwerksrückständen und/oder Abfallsäuren wie z.B. Schwefelsäure und/oder schwefelige Säuren aus Eloxalbädern in die zirkulierende Wirbelschicht eingebracht werden.

6. Verfahren nach einem der vorhergehenden Ansprüche, dadurch gekennzeichnet, daß als wasserabspaltende Substanzen zur pyrohydrolytischen Aufspaltung des $CaCl_2$ Abfallsäuren wie z.B. Schwefelsäure und/oder schwefelige Säuren aus Eloxalbädern in die zirkulierende Wirbelschicht eingebracht werden.

7. Verfahren nach einem der vorhergehenden Ansprüche, dadurch gekennzeichnet, daß zusätzliche Energieträger in Form von ölhaltigen Abfallstoffen in die zirkulierende Wirbelschicht eingebracht werden.

8. Verfahren nach Anspruch 7, dadurch gekennzeichnet, daß als zusätzliche Energieträger Bleicherden aus Altölaufbereitungsanlagen und/oder Filtererden aus Walzölreinigungsanlagen verwendet werden.

9. Verfahren nach einem der vorhergehenden Ansprüche, dadurch gekennzeichnet, daß die Rehydratisierung des chloridarmen Gips-Anhydrits bei Temperaturen zwischen 150 und 200 °C erfolgt.

10. Verfahren nach einem der vorhergehenden Ansprüche, dadurch gekennzeichnet, daß als gipshaltige, wasserabspaltende Substanzen Rauchgasentschwefelungs-Gips (REA-Gips) und/oder Chemie-Gips aus nassen Abgasreinigungsanlagen in die Rehydratisierungsstufe eingebracht werden.

11. Verfahren nach einem der vorhergehenden Ansprüche, dadurch gekennzeichnet, daß die mittlere Verweilzeit der gasförmigen Stoffe in der zirkulierenden Wirbelschicht 2 bis 4 s beträgt.


## Claims

1. A process for producing low-chloride gypsum products from calcium-containing residues from dry or wet waste gas cleaning plants, such as e.g. from coal power stations, incineration plants or refining plants, that contain sulphites, chlorides, sulphates, hydroxides, carbonates or oxides of calcium or their mixtures, by oxidation and pyrohydrolytic elimination of chloride, characterized in that the calcium-containing residues, together with sulphur-containing, largely Ca-free substances for sulphating the calcium components of the residues not bound as sulphite or sulphate and together with water, steam and/or water-eliminating substances are reacted in a circulating fluidized bed in presence of an $O_2$-containing hot gas for pyrohydrolytic breakdown of the calcium chloride components of the residues, during which a low-chloride gypsum-anhydrite is formed as product.

2. A process according to claim 1, characterized in that the low-chloride gypsum-anhydrite produced in the circulating fluidized bed is rehydrated in a downstream process stage by adding water, steam and/or gypsum-containing, water-eliminating substances to a β-hemihydrate-gypsum.

3. A process according to one of the preceding claims, characterized in that spray absorption residues, with 20-70 wt% $CaSO_3$, 2-10 wt% $CaCl_2$, 2-30 wt% $Ca(OH)_2$, 5-10 wt% $CaCO_3$ and 5-10 wt% $CaSO_4$ are used as calcium-containing residues.

4. A process according to one of the preceding claims, characterized in that the temperature in the circulating fluidized bed is between 500 and 650 °C.

5. A process according to one of the preceding claims, characterized in that sublimed sulphur from power station residues and/or waste acids such as e.g. sulphuric acid and/or sulphur-containing acids from Eloxal baths are introduced into the circulating fluidized bed as sulphur-containing, largely Ca-free substances.

6. A process according to one of the preceding claims, characterized in that waste acids such as e.g. sulphuric acid and/or sulphur-containing acids from Eloxal baths are introduced into the circulating fluidized bed as water-eliminating substances for the pyrohydrolytic breakdown of the $CaCl_2$.

7. A process according to one of the preceding claims, characterized in that additional sources of energy in the form of oil-containing wastes are introduced into the circulating fluidized bed.

8. A process according to claim 7, characterized in that bleaching earths from used oil reconditioning plants and/or filter earths from rolling oil purification plants are used as additional sources of energy.

9. A process according to one of the preceding claims, characterized in that the rehydration of the low-chloride gypsum anhydrite occurs at temperatures between 150 and 200 °C.

10. A process according to one of the preceding claims, characterized in that flue gas desulphurization gypsum (REA gypsum) and/or chemical gypsum from wet waste gas cleaning plants are introduced into the rehydration stage as gypsum-containing water-eliminating substances.

11. A process according to one of the preceding claims, characterized in that the mean residence time of the gaseous substances in the circulating fluidized bed is 2 to 4 sec.

**Revendications**

1. Procédé de préparation de plâtres ou produits apparentés à faible teneur en chlorures, à partir de résidus calciques d'installations d'épuration de gaz résiduaires à sec ou au mouillé, par exemple de génératrices à charbon, d'installations de combustion ou de fonderies, ces résidus contenant des sulfites, des chlorures, des sulfates, des hydroxydes, des carbonates ou des oxydes du calcium ou leurs mélanges, par oxydation et scission pyrohydrolytique des chlorures, caractérisé en ce que l'on fait réagir les résidus calciques
avec des matières contenant du soufre mais pratiquement exemptes de Ca, pour sulfatation du calcium des résidus non combinés à l'état de sulfites ou de sulfates, et avec de l'eau, de la vapeur d'eau ou des substances libérant de l'eau, pour scission pyrohydrolytique du chlorure de calcium contenu dans les résidus, dans une couche tourbillonnaire en circulation en présence de gaz chauds contenant 02, le produit obtenu étant une anhydrite à faible teneur en chlorure.

2. Procédé selon la revendication 1, caractérisé en ce que l'anhydrite à faible teneur en chlorure produite dans la couche tourbillonnaire en circulation est réhydratée dans une opération subséquente par addition d'eau, de vapeur d'eau et/ou de substances contenant du plâtre et libérant de l'eau, en un plâtre, bêta-hémihydrate.

3. Procédé selon l'une des revendications qui précèdent, caractérisé en ce que l'on utilise en tant que résidus calciques des résidus d'adsorption par pulvérisation contenant 20 à 70% en poids de $CaSO_3$, 2 à 10% en poids de $CaCl_2$, 2 à 30% en poids de Ca(OH)2, 5 à 10% en poids de $CaCO_3$ et 5 à 10% en poids de $CaSO_4$.

4. Procédé selon l'une des revendications qui précèdent, caractérisé en ce que la température dans la couche tourbillonnaire en circulation se situe entre 500 et 650°C.

5. Procédé selon l'une des revendications qui précèdent, caractérisé en ce que l'on introduit dans la couche tourbillonnaire en circulation, en tant que matières contenant du soufre et pratiquement exemptes de Ca, des fleurs de soufre de résidus de génératrices et/ou des acides résiduaires, par exemple l'acide sulfurique et/ou des acides sulfureux provenant de bains d'anodisation.

6. Procédé selon l'une des revendications qui précèdent, caractérisé en ce que l'on introduit dans la couche tourbillonnaire en circulation, en tant que substances libérant de l'eau pour la scission pyrohydrolytique du $CaCl_2$, des acides résiduaires tels que l'acide sulfurique et/ou des acides sulfureux provenant de bains d'anodisation.

7. Procédé selon l'une des revendications qui précèdent, caractérisé en ce que l'on introduit dans la couche tourbillonnaire en circulation des fournisseurs d'énergie supplémentaires sous forme de matières résiduaires contenant des huiles.

8. Procédé selon la revendication 7, caractérisé en ce que l'on utilise en tant que fournisseurs d'énergie supplémentaires des terres de blanchiment provenant d'installations de traitement d'huiles usées et/ou des terres filtrantes provenant d'installations d'épuration d'huiles de laminage.

9. Procédé selon l'une des revendications qui précèdent, caractérisé en ce que la réhydratation de l'anhydrite à faible teneur en chlorure est réalisée à des températures de 150 à 200°C.

10. Procédé selon l'une des revendications qui précèdent, caractérisé en ce que l'on introduit à l'opération de réhydratation, en tant que substances contenant du plâtre et libérant de l'eau, du plâtre de désulfuration de gaz de fumées (plâtre DGF) et/ou du plâtre chimique provenant d'installations d'épuration de gaz résiduaires au mouillé.

11. Procédé selon l'une des revendications qui précèdent, caractérisé en ce que la durée de passage moyenne des substances gazeuses dans la couche tourbillonnaire en circulation est de 2 à 4 s.

Fig. 1

Fig. 2